(19) Europäisches Patentamt
European Patent Office
Office européen des brevets

(11) **EP 2 435 793 B1**

(12) **FASCICULE DE BREVET EUROPEEN**

(45) Date de publication et mention de la délivrance du brevet:
**03.01.2018 Bulletin 2018/01**

(51) Int Cl.:
***G01D 4/00*** *(2006.01)*      ***H04W 74/06*** *(2009.01)*
***H04L 12/403*** *(2006.01)*

(21) Numéro de dépôt: **10724393.3**

(22) Date de dépôt: **28.05.2010**

(86) Numéro de dépôt international:
**PCT/EP2010/057432**

(87) Numéro de publication internationale:
**WO 2010/136571 (02.12.2010 Gazette 2010/48)**

(54) **PASSERELLE DE TRANSMISSIONS POUR CAPTEURS**

ÜBERTRAGUNGSGATEWAY FÜR SENSOREN

TRANSMISSION GATEWAY FOR SENSORS

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **29.05.2009 FR 0953596**

(43) Date de publication de la demande:
**04.04.2012 Bulletin 2012/14**

(73) Titulaire: **SAGEMCOM ENERGY & TELECOM SAS 92500 Rueil-Malmaison (FR)**

(72) Inventeurs:
• **BAROIS, Jérôme**
  **F-92500 Rueil-Malmaison (FR)**
• **LE DILLAU, Cédric**
  **F-92500 Rueil-Malmaison (FR)**

(74) Mandataire: **Camus, Olivier Jean-Claude Cabinet Camus Lebkiri 25, Rue de Maubeuge 75009 Paris (FR)**

(56) Documents cités:
**EP-A1- 1 699 174     EP-A2- 0 306 059**

**Description**

*Domaine technique de l'invention*

La présente invention concerne une passerelle de transmissions pour capteurs, notamment une passerelle destinée à retransmettre vers un serveur distant des données transmises par des capteurs du type compteur domotique.

*Arrière-plan technologique de l'invention*

On connaît des réseaux formés par une pluralité de capteurs - par exemple des compteurs électriques, des compteurs d'eau ou des sondes thermiques - dont les mesures sont transmises vers un serveur distant destiné à analyser ces données pour établir, par exemple, un suivi et une facturation de ces mesures.

Afin d'optimiser la transmission de ces données, il est connu d'utiliser une unique passerelle recevant les données à transmettre de ces compteurs afin d'effectuer la retransmission de ces données via, par exemple, une liaison haut débit entre la passerelle et le serveur distant.

Pour recevoir les données des capteurs, la passerelle doit établir une communication avec ces derniers alors même que ces communications peuvent être perturbées lorsque leurs signaux interfèrent, notamment lorsque ces communications sont établies via des ondes radio modulées à des fréquences proches ou identiques.

Par conséquent, il est nécessaire de prévoir un procédé permettant aux différents capteurs, reliés à une passerelle selon des modes de communication pouvant interférer, de transmettre successivement leurs données à la passerelle.

Un tel procédé est par exemple décrit dans la publication EP 1 699 174.

A cet effet, il est connu de programmer ces capteurs pour qu'ils effectuent une transmission statique, c'est-à-dire à des délais fixes propres à chaque capteur de telle sorte que, statistiquement, la passerelle soit disponible pour communiquer avec chacun des capteurs après un nombre raisonnable de tentatives.

Selon une autre approche dynamique, il est connu de munir les capteurs de moyens d'émission/réception afin que chaque capteur puisse sonder le niveau d'occupation de son mode de communication avec la passerelle. Ainsi, un capteur peut attendre que ce mode de communication soit disponible pour requérir une communication avec la passerelle.

La présente invention résulte de la constatation que la mise en oeuvre de telles approches connues présente de nombreux inconvénients. Notamment, un procédé statique ne permet pas de pallier à une éventuelle modification de l'environnement d'émission des capteurs, par exemple dû à la présence d'un nouveau capteur, d'un encombrement et/ou d'une perturbation du mode de communication.

Par ailleurs, le procédé dynamique ne permet pas d'éviter que des capteurs « dominants », ayant une forte activité, occupent la passerelle de façon prédominante au point d'empêcher l'établissement d'une communication pour les capteurs « soumis » moins actifs.

*Description générale de l'invention*

Dans ce contexte, la présente invention vise à fournir une passerelle qui alloue efficacement des dates de transmission à des capteurs afin d'éviter des transmissions simultanées selon un même mode de communication ou selon des modes de communication pouvant interférer. C'est pourquoi, l'invention concerne une passerelle destinée à recevoir des transmissions de données émises par des capteurs afin de retransmettre ultérieurement ces données vers un serveur distant, une durée et un mode de communication étant associés à chaque transmission, caractérisée en ce qu'elle est munie de moyens pour mettre en oeuvre des cycles de programmation allouant des dates de transmissions aux capteurs selon leurs modes de communication avec:

- Une première étape d'application de règles de sélection générant, à partir de transmissions requises, au moins une séquence de dates allouées à des transmissions sélectionnées parmi ces transmissions requises de telle sorte que ces transmissions sélectionnées puissent être effectuées sur toutes leurs durées sans interférer entre elles, et
- Une seconde étape d'application de règles d'itération déterminant des règles de résolution et des transmissions requises à appliquer lors d'un cycle ultérieur de programmation.

Grâce à l'invention, les transmissions sélectionnées lors d'un cycle de programmation peuvent être effectuées de façon successive, ou séquentielle, selon leurs modes de communication sans qu'elles interfèrent entre elles. En outre, l'invention permet d'inclure les transmissions non sélectionnées lors d'un cycle ultérieur de programmation de transmissions requises de telle sorte que ces transmissions peuvent obtenir une date de transmission lorsque les conditions nécessaires à celle-ci sont réunies.

Par ailleurs, grâce à une telle passerelle, une modification dans l'environnement du fonctionnement de la passerelle peut être prise en compte pour reprogrammer des transmissions en accord avec le nouvel environnement, typiquement en présence d'une émission perturbant les transmissions en cours.

Dans une réalisation, la passerelle comprend des moyens pour appliquer des règles de sélection comprenant au moins un des éléments suivants : une contrainte imposant une unique transmission à un instant donné sur un même mode de communication, une contrainte imposant une unique transmission à un instant donné sur deux modes de communication distincts susceptibles d'interagir, une contrainte imposant une transmission périodique de façon constante dans des cycles de programmation, une contrainte imposant une chronologie entre différentes transmissions.

Selon une réalisation, la passerelle comprend des moyens pour générer, à la première étape, une pluralité de séquences selon un procédé de ramification, la séquence allouant un maximum de dates à des transmissions étant utilisée pour sélectionner des transmissions parmi les transmissions requises.

Dans une réalisation, la passerelle comprend des moyens pour que les règles itératives comprennent au moins un des éléments suivants : une contrainte par rapport à niveau de priorité associé à une transmission, une flexibilité par rapport à une capacité de décalage d'une transmission, une considération de règles spécifiques à un mode de communication, un nombre maximal d'itération.

Selon une réalisation, la passerelle comprend des moyens pour considérer des règles d'itération spécifiques à un mode de communication radio, cellulaire et/ou logiciel.

Dans une réalisation, la passerelle comprend des moyens pour mettre en oeuvre les règles de sélection et/ou d'itération dans une programmation objet du type UML considérant chaque opération de la passerelle comme un objet défini par au moins un des paramètres suivants: Une durée d'exécution, une priorité de transmission, une date de transmission possible, une date de transmission effective, une date de fin de transmission imposée, une date de fin de transmission, un type de transmission.

Selon une réalisation, la passerelle comprend des moyens pour que chaque opération soit définie par au moins un des types de transmission suivants :

- Un type « stub event » pour une transmission fictive permettant de réserver une plage de transmission,
- Un type « software event » pour une transmission relative à une opération logicielle,
- Un type « internet communication » pour une transmission via le réseau Internet, ou
- Un type « radio communication » pour une transmission via des ondes radio.

Dans une réalisation, préalablement à la réalisation d'un cycle de programmation pour des transmissions requises, la passerelle comprend des moyens pour vérifier la condition suivant pour un ensemble d'opérations:

$$\sum C_i \le \llbracket t2 - t1 \rrbracket$$

Où, pour chaque transmission i,

- Ci est une durée,

- Ri l'instant de transmission,
- Di le dernier délai possible de transmission,

et t1 = min (Ri) et t2 = max (Di)

Selon une réalisation, la passerelle comprend un programmateur central relié à des applications logicielles, chaque application logicielle étant dédiée à un capteur pour établir avec le programmateur central la programmation des opérations requises pour obtenir les transmissions sélectionnées. L'invention concerne également un procédé de gestion d'une passerelle destinée à recevoir des transmissions de données émises par des capteurs afin de retransmettre ultérieurement ces données vers un serveur distant, une durée et un mode de communication étant associés à chaque transmission, caractérisé en ce qu'on utilise des moyens pour mettre en oeuvre des cycles de programmation allouant des dates de transmissions aux capteurs à l'aide d'une passerelle, conforme à l'une des réalisations précédentes, selon leurs modes de communication avec:

- Une première étape d'application de règles de sélection générant, à partir de transmissions requises, au moins une séquence de dates allouées à des transmissions sélectionnées parmi ces transmissions requises de telle sorte que ces transmissions sélectionnées puissent être effectuées selon leur mode de communication, sur leurs durées, sans interférer entre elles, et
- Une seconde étape d'application de règles d'itération déterminant les règles de résolution et les transmissions requises appliquées lors d'un cycle ultérieur de programmation.

*Brève description des figures*

D'autres caractéristiques et avantages de l'invention ressortiront clairement de la description qui en est donnée ci-dessous, à titre indicatif et nullement limitatif, en référence aux figures ci-jointes sur lesquelles :

- La figure 1 est un schéma fonctionnel d'une passerelle conforme à l'invention,
- Les figures 2a à 2f sont des diagrammes illustrant une mise en oeuvre d'une passerelle conforme à l'invention,
- la figure 3 illustre une approche en programmation objet d'une passerelle conforme à l'invention,
- la figure 4 représente la mise en oeuvre d'un procédé de ramification générant des séquences de dates pouvant être allouées à un groupe de transmissions requises,
- les figures 5a à 5g représentent des communications internes à une passerelle conforme à l'invention entre des applications logicielles dédiées à un capteur et un programmateur central, et
- les figures 6a à 6d représentent des séquences de transmission gérées par différentes réalisations de l'invention.

*Description des formes de réalisation préférées de l'invention*

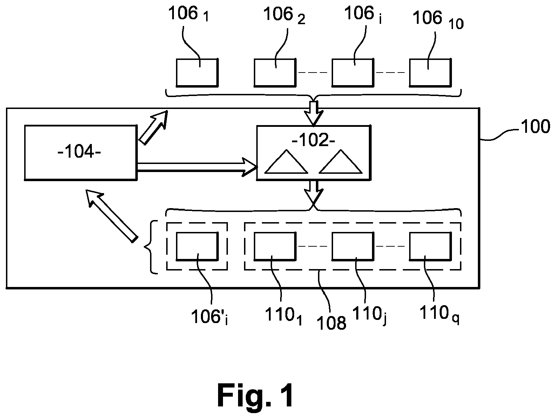

A la figure 1 est représentée de façon fonctionnelle une passerelle 100 mettant en oeuvre, conformément à l'invention, un cycle de programmation utilisant des règles 102 de sélection et des règles 104 d'itération pour allouer une date $110_j$ à des transmissions requises $106_i$ auprès de la passerelle 100 par des capteurs (non représentés).

Plus précisément, à chaque cycle de programmation, des règles 102 de sélection permettent de déterminer, à partir des transmissions $106_j$ requises, une séquence 108 de dates $110_j$ allouées à des transmissions sélectionnées parmi ces transmissions $106_i$ requises.

Afin d'éviter d'éventuelle perturbations entre des transmissions effectuées au moyen de modes, ou canaux, de communication identiques ou interférents, cette séquence 108 est telle que les transmissions sélectionnées sont effectuées de façon séquentielle, ou successive, dans chacun de ces modes de communication, voire pour des ensembles de modes pouvant interférer. Par la suite, la passerelle 100 peut appliquer des règles 104 d'itération à de nouvelles transmissions $106_i$ requises, avec éventuellement de nouvelles règles 102 de résolution, lors d'un prochain cycle de programmation.

Notamment, chaque nouveau cycle de programmation permet, d'une part, d'inclure au moins une transmission $106'_i$ précédemment requise dans un nouveau groupe de transmissions requises et, d'autre part, de prendre en compte d'éventuelles modifications dans la disponibilité d'un des canaux considérés.

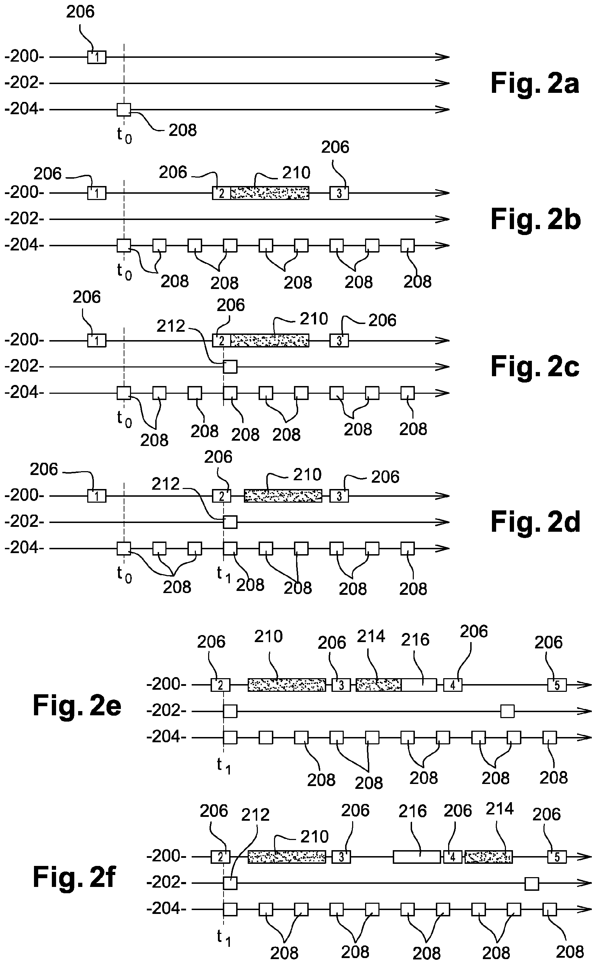

Pour illustrer ce fonctionnement, les figures 2a à 2f représentent des transmissions requises et/ou sélectionnées par une passerelle conforme à l'invention et recevant des signaux selon un mode de communication radio (200), cellulaire GPRS (202) ou logiciel (204).

Plus précisément des transmissions 206 radios de données émises par un premier capteur, selon le canal 200, sont requises pour une durée de 2 minutes toutes les 10 minutes tandis que des transmissions 208 logicielles sont requises pour une durée similaire toutes les 20 minutes.

Finalement, une transmission 210 radio d'un second capteur, devant être effectuée dans un délai de 20 minutes à compter de la première transmission 208 logicielle, est requise pour une durée de 7 minutes.

Considérant ces transmissions requises (figure 2a), une passerelle 100 conforme à l'invention peut mettre en oeuvre un cycle de programmation pour allouer des dates à ces différentes transmissions.

Le résultat de ce cycle de programmation - des transmissions sélectionnées auxquelles sont allouées des dates de transmission - est représenté sur la figure 2b. Compte tenu de l'absence d'interférence entre les transmissions 206 radios et les transmissions 208 logicielles, l'ensemble de ces transmissions 206 et 208 sont programmées sans prendre en considération un éventuel conflit entre ces transmissions tandis que la transmission 210 est programmée à une date évitant, pendant toute la durée de cette transmission 210, une interférence avec les transmissions 206 radio.

Cette programmation temporaire peut être affectée par un évènement extérieur comme une transmission 212 via le canal 202 GPRS émise par un troisième capteur (figure 2c).

Dans cet exemple, cette transmission 212 perturbe la seconde transmission 206 qui est alors décalée, lors d'un nouveau cycle de programmation, à la place de la troisième transmission 206.

C'est pourquoi, comme représenté sur la figure 2d, un nouveau cycle de programmation aboutit à décaler la transmission 210 de façon à ne pas interférer avec une transmission 206 ou la transmission 212.

Par la suite, deux transmissions 214 et 216 sont requises pour des durées et des instants ne permettant pas leurs transmissions séquentielles i.e. il existe un enchevêtrement entre ces transmissions.

Dans ce cas, en utilisant par exemple des règles de priorités, le programmateur temporaire alloue une date antérieure à la transmission 216 - de forte priorité - et une date ultérieure à la transmission 214 - de faible priorité (figure 2f).

Il convient de noter que, en fonction des réalisations, d'autres configurations des modes ou des canaux de communications peuvent être pris en considération. Par exemple, une passerelle 100 peut gérer:

- deux canaux de radiocommunication A et B utilisant une même longueur d'onde,
- un canal communication du type téléphonie cellulaire, et
- un canal de programmation du type logiciel.

Dans ce cas, les transmissions effectués via les modes, ou canaux, de communication A et B présentent également un risque d'interférence inter canal de telle sorte que les règles de sélection devront interdire des transmissions simultanées selon ces deux canaux.

Par contre, les canaux de communications du type réseau internet - ADSL, Wifi ou Ethernet - peuvent être programmées sans prendre en compte des interférences puisque ces canaux permettent des communications simultanées.

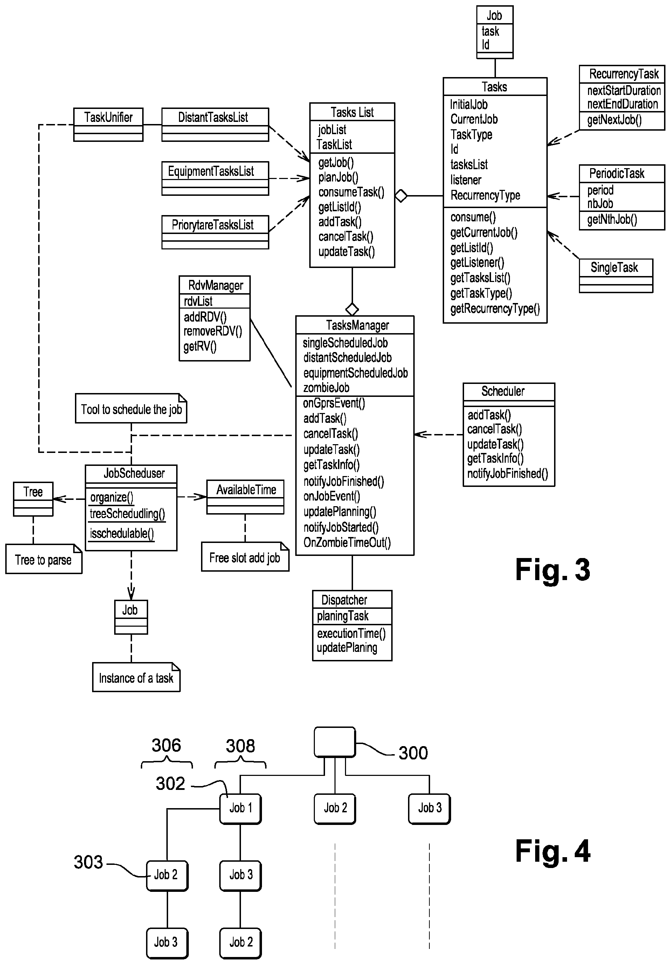

De façon pratique, l'invention peut être mise en oeuvre au moyen d'une programmation objet telle qu'une programmation conforme au langage UML pour Unified Modelling Language, illustrée à la figure 3, utilisant des éléments ou « event » en anglais, pour définir toute opération qui doit être mise en oeuvre par la passerelle à un instant donné.

Typiquement, une transmission de données est un évènement défini par une durée, ou « duration » en anglais, et par sa date de réalisation, ou « start time » en anglais.

A cet effet, il convient de souligner que la durée d'une transmission est connue par la plateforme préalablement à la mise en oeuvre d'un cycle de programmation temporaire tandis que sa date de réalisation est généralement une donnée à déterminer par ce cycle.

Un évènement peut être de différents types, ou « type » en anglais. Dans cette réalisation de l'invention, on identifie les types d'évènements suivants:

- type « stub event » pour un évènement visant à réserver une plage de transmission,
- type « software event » pour un évènement relatif à une opération logicielle,
- type « internet communication » pour un évènement relatif à une opération de transmission via un canal internet, ou encore
- type « radio communication » pour un évènement relatif à une opération de transmission via un canal radio.

En fonction des réalisations, d'autres paramètres peuvent définir un évènement telles que, de façon non limitative, sa nature statique ou dynamique (« static » / « dynamic »), son niveau de priorité (« priority »), sa périodicité (« periodicity »), sa disponibilité (« reserved » / « available »).

A partir de ces paramètres - évènements, canaux, types - il est possible de définir des règles de sélection comme, dans cette réalisation:

- une contrainte imposant un unique évènement à un instant donné sur un même mode de communication,
- une contrainte imposant un unique évènement à un instant donné sur deux modes de communication distincts susceptibles d'interagir,
- une contrainte imposant un évènement périodique de façon constante dans les cycles de programmation,
- une contrainte imposant une chronologie entre deux évènements X et Y, par exemple X débute avant/après Y.

La figure 3 illustre notamment l'utilisation d'un programmateur conforme à l'invention, sous la forme d'une classe propre à un langage objet, qui opère avec les transmissions considérées comme des objets notamment définis par :

- Une durée d'exécution,
- Une priorité,
- Un instant de début de transmission auquel cette dernière peut s'effectuer,
- Un instant de fin de transmission auquel cette dernière doit avoir été effectuée,
- Un instant initial auquel démarre la transmission, et

- Un instant final auquel finalise la transmission.

Par ailleurs, cette figure 3 illustre l'utilisation, dans la passerelle, d'un gestionnaire ou programmateur central - « Jobscheduler » en anglais - qui détermine les instants initiaux et les instants finaux de toutes les opérations (« Job ») nécessaires à la réalisation d'une tâche (« Task »), la programmation d'une transmission étant décomposée en une pluralité de tâches.

Le programmateur central fonctionne donc comme une classe qui utilise des propriétés communes à l'ensemble des objets 'opérations' pour déterminer les instants initiaux et finaux auxquels sont opérations peuvent être effectuées.

A cet effet, le programmateur peut procéder en trois étapes:

- Dans une première étape « IsSchedulable », on vérifie qu'un groupe d'opérations i est programmable.

Plus précisément, on vérifie la faisabilité de cette programmation en considérant l'équation suivante :

$$\sum C_i \leq \lceil t2 - t1 \rceil$$

Où, pour une opération i, on note:

- $C_i$ la durée,
- $P_i$ la priorité,
- $R_i$ l'instant de transmission,
- $D_i$ le dernier délai possible de transmission,
- $S_i$ l'instant initial de transmission,

et t1 = min ($R_i$) et t2 = max ($D_i$)

D'une façon générale, on peut définit une condition pour que, en dénommant U un facteur de charge entre deux dates t1 et t2, ce facteur de charge respecte l'équation suivante :

$$U_{t1,t2} = \frac{\sum C_i}{t2 - t1} \leq 1$$

- Lorsque la faisabilité de la programmation est vérifiée, une étape « treescheduling » est mise en oeuvre pour fournir des séries d'opérations ordonnées différemment selon un procédé de ramification représenté à la figure 4.

Plus précisément, dans une première étape, la première opération 300 requise forme une base de programmation à partir de laquelle la faisabilité de la deuxième opération requise 302, séquentiellement à la première opération 300, est analysée.

Si cette faisabilité est vérifiée, la première opération 300 et la deuxième opération 302 requises forment une base de programmation à partir de laquelle la faisabilité de la troisième opération requise 304, séquentiellement vis-à-vis de cette première opération 300 et de la seconde opération 302, est analysée.

A nouveau, si cette faisabilité est vérifiée, la première opération 302, la deuxième opération 304 et la troisième opération 306 requises deviennent des bases de programmation pour la quatrième opération requise.

Ainsi, une série d'opérations possibles est générée. Toutefois, si cette quatrième opération requise ne peut pas être programmée séquentiellement vis-à-vis des trois premières opérations programmées, la passerelle étude la possibilité de programmer séquentiellement la quatrième opération séquentiellement vis-à-vis des deux premières opérations puis, en cas d'échec, vis-à-vis de la première opération.

- Ce procédé « treeScheduling », ou de ramification, génère des séries d'opérations, avec leurs dates associées, qui peuvent être prises en compte par une troisième étape « organize ».

Lors de cette étape « organize », le programmateur tente d'identifier des périodes d'émission disponibles pour chaque opération d'une série. Dans cette réalisation de l'invention, le programmateur considère les instants initiaux requis pour chaque opération et vérifie, successivement, s'il est possible de leurs alloués une date d'opération.

Après avoir effectué cette considération avec l'ensemble des séries d'opérations identifiées, le programmateur peut indiquer la série d'opérations optimale qui, par exemple, comprend le plus grand nombre d'opérations pondérées de leur niveau de priorité.

Dès que le procédé « organize » parvient à fournir des périodes d'émission disponibles pour chaque opération d'une série, le programmateur dispose d'une série d'opérations avec les instants initiaux et finaux de toutes les opérations.

Afin de réduire le délai de calcul, la liste d'opérations considérée par le procédé « treescheduling » est prise en compte selon un algorithme EDF pour « Earliest Deadline First », c'est-à-dire « la première échéance en premier » en anglais.

Si l'algorithme ne parvient pas à cela dans un délai et/ou un nombre d'itération préprogrammé, il fournit la série d'opérations qui a permis de programmer le plus grand nombre d'opérations.

A partir de cette information, le programmateur utilise des règles itératives pour modifier les règles de sélection. A titre d'exemple de règles itératives, il convient de considérer :

- un niveau de priorité pour la reprise en compte d'un évènement,
- un niveau de flexibilité ou de dynamisme d'un évènement de telle sorte que, par exemple, un élément statique (flexibilité nulle) ne puisse pas être reporté,

- une mise en oeuvre des évènements selon un niveau de priorité,
- une priorité maximale pour les évènements périodiques,
- une utilisation des données de plus haute priorité en premier,
- une prise en compte des règles GPRS si le contexte est GPRS,
- des règles supplétives ou accessoires,
- un nombre maximal d'itération.

La ramification des opérations est d'autant plus longue qu'aucune série d'opération ne permet de trouver une solution.

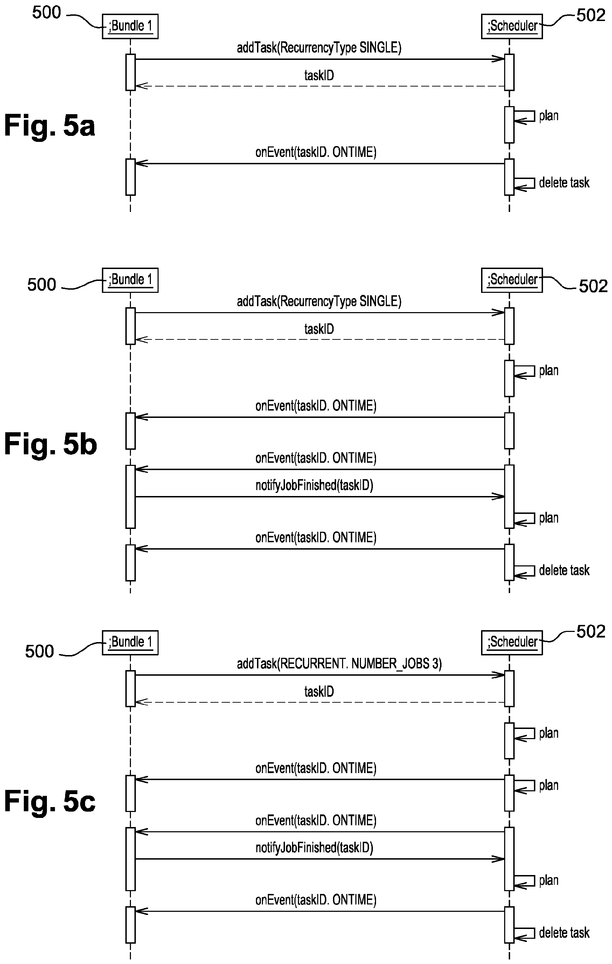

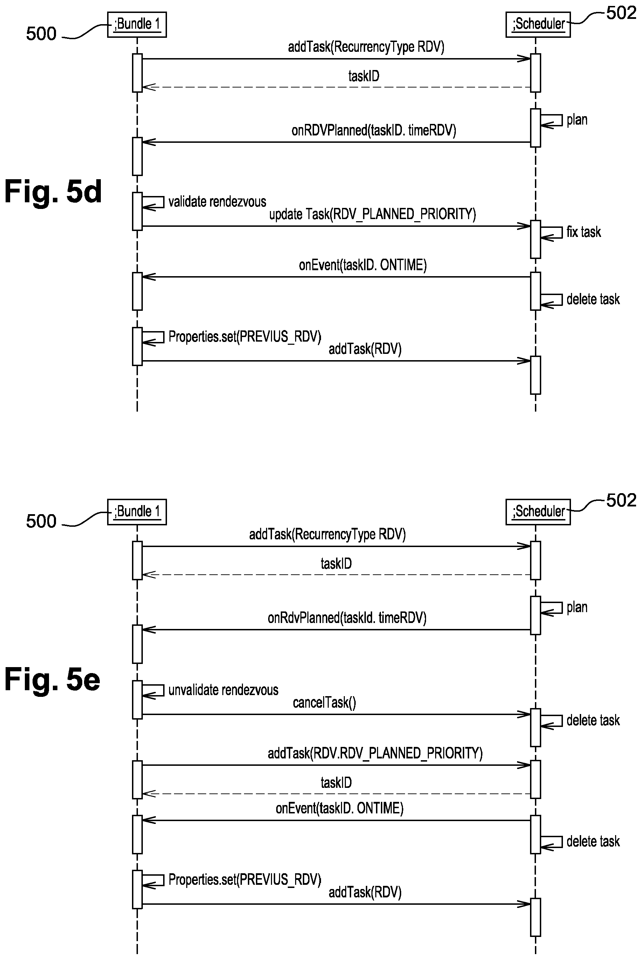

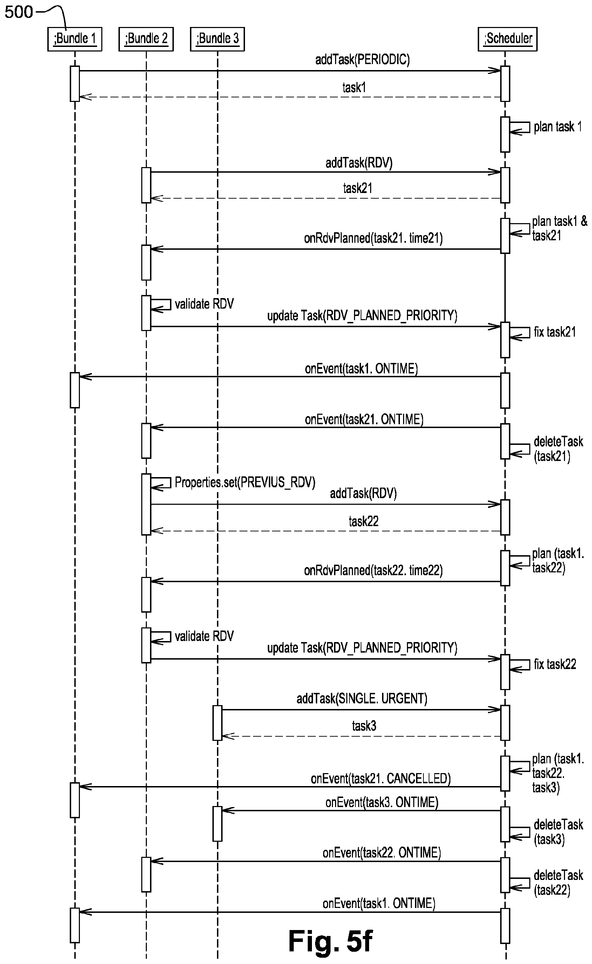

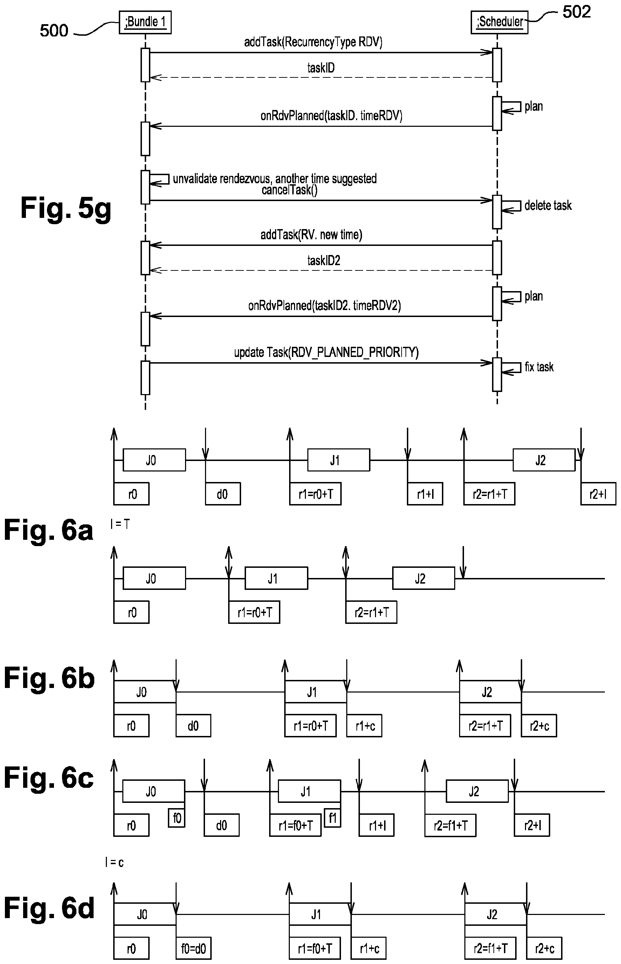

Dans une passerelle conforme à l'invention, les procédés décrits ci-dessus peuvent être mis en oeuvre par des applications logicielles 500 (figures 5a à 5g), ou « bundle » en anglais, chaque application logicielle 500 étant dédiée à un capteur.

De telles applications logicielles sont en relation avec le programmateur central (502) de la passerelle selon différents types de communications tels que, de façon non limitative et à titre d'exemple :

- Des communications de transmission d'une opération simple (figure 5a) comprenant l'ajout d'une tâche (addTask), la validation de la date allouée à la réalisation de cette tâche (taskId), la réalisation de la tâche (onEvent) et la suppression de la tâche (delete task),
- Des communications de transmission d'une opération périodique (figure 5b) répétant des opérations décrites ci-dessus pour une pluralité de réalisations à différents instants,
- Des communications de transmission d'une opération récurrente (figure 5c),
- Des communications de transmission d'une opération visant à bloquer une plage d'émission.

D'une façon générale, ces figures illustrent l'interaction entre chaque application logicielle, ou « bundle » en anglais, de la passerelle dédiée à un capteur et le contrôleur. D'une façon générale, cette interaction peut être schématisée en deux étapes, à savoir :

- Une première étape au cours duquel l'application logicielle informe le programmateur de sa requête de tâche - signal « add Task », et
- Une seconde étape au cours de laquelle le programmateur informe l'application de la réalisation d'une opération relative à cette tâche - signal « notify JobFinished ».

Entre ces deux étapes, le programmateur met en oeuvre un procédé conforme à l'invention (plan) pour allouer et transmettre - signal « onEvent »

- une date de transmission à la transmission concernée de telle sorte que, lorsque cette transmission a lieu, le programmateur peut supprimer celle-ci des transmissions en attente (delete Task).

La présente invention est susceptible de nombreuses variantes. Notamment, il est possible de définir arbitrairement des paramètres tels que le nombre de cycles de programmations effectués par une passerelle en fonction du temps ou le nombre d'étapes de ramification utilisées pour déterminer une séquence de transmissions sélectionnées.

En référence aux figures 6a, 6b, 6c et 6d, il est également possible de définir une période T pendant laquelle on impose la réalisation d'une seule opération. Dans ce cas, en notant i une tâche, ri l'instant initial, Ji la durée, et di la date butoir (ou « deadline » en anglais), il est possible de définir un intervalle I entre l'instant initial et la date butoir telle que :

$$di = ri + I$$

Lorsque la période T est fixe, il est alors possible d'avoir trois séries d'opérations selon qu'il s'agisse d'un cas par défaut (figure 6a) ou de cas spécifiques, à savoir d'un cas où I=T (figure 6b) ou d'un cas où I =c (figure 6c) distinct de T.

De façon analogue, en considérant que la période T de réalisation d'une opération n'est pas fixe, T devient le temps écoulé entre la fin d'une opération et la réalisation de l'opération suivante de telle sorte qu'il est possible d'avoir deux séries différentes selon qu'il s'agisse d'un cas par défaut (figure 6d) ou d'un cas où I =c (figure 6c).

## Revendications

1. Passerelle (100) destinée à recevoir des données transmises par des capteurs et à retransmettre ultérieurement ces données vers un serveur distant, une durée et un mode de communication étant associés à chaque transmission de données de l'un des capteurs vers la passerelle, la passerelle étant munie de moyens (102, 104, 108) pour mettre en oeuvre des cycles de programmation allouant des dates de réalisation (110$_i$) aux transmissions de données des capteurs, selon leurs modes de communication et leur durées, chaque cycle de programmation comprenant:

   - Une première étape d'application de règles de sélection (102) générant, à partir d'un groupe de transmissions (106i) requises par les capteurs, au moins une séquence (108) de dates (110$_j$) de réalisation allouées à des transmissions sélectionnées parmi les transmissions requises de telle sorte que ces transmissions sélectionnées puissent être effectuées selon leur mode de communication, sur leurs durées, sans interférer entre elles, et

   - Une seconde étape d'application de règles d'itération (104) permettant à la passerelle de modifier ses règles de sélection à appliquer lors d'un cycle ultérieur de programmation et d'inclure une transmission précédemment requise (106'$_i$) et non sélectionnée dans le groupe des transmissions requises (106i) du cycle ultérieur de programmation.

2. Passerelle (100) selon la revendication 1 **caractérisée en ce qu'**elle comprend des moyens pour appliquer des règles de sélection (102) comprenant au moins un des éléments suivants : une contrainte imposant une unique transmission à un instant donné sur un même mode de communication, une contrainte imposant une unique transmission à un instant donné sur deux modes de communication distincts susceptibles d'interagir, une contrainte imposant une transmission périodique de façon constante dans des cycles de programmation, une contrainte imposant une chronologie entre différentes transmissions.

3. Passerelle selon la revendication 1 ou 2 **caractérisée en ce qu'**elle comprend des moyens pour générer, à la première étape, une pluralité de séquences selon un procédé de ramification, la séquence allouant un maximum de dates de réalisation à des transmissions étant utilisée pour sélectionner des transmissions parmi les transmissions requises.

4. Passerelle selon l'une des revendications précédentes **caractérisée en ce qu'**elle comprend des moyens pour appliquer des règles itératives comprennent au moins un des éléments suivants : une contrainte par rapport à niveau de priorité associé à une transmission, une flexibilité par rapport à une capacité de décalage d'une transmission, une considération de règles spécifiques à un mode de communication, un nombre maximal d'itération.

5. Passerelle selon la revendication 4 **caractérisée en ce qu'**elle comprend des moyens pour considérer des règles d'itération spécifiques à un mode de communication radio (200), cellulaire (202) et/ou logiciel (204).

6. Passerelle selon l'une des revendications précédentes **caractérisée en ce qu'**elle comprend des moyens pour mettre en oeuvre les règles de sélection et/ou d'itération dans une programmation objet du type UML considérant chaque opération de la passerelle comme un objet défini par au moins un des paramètres suivants: Une durée d'exécution, une priorité de transmission, une date de transmission possible, une date de transmission effective, une date de fin de transmission imposée, une date de fin de transmission, un type de transmission.

**7.** Passerelle selon la revendication 6 **caractérisée en ce qu'**elle comprend des moyens pour définir chaque opération par au moins un des types de transmission suivants :

- type « stub event » pour une transmission fictive permettant de réserver une plage de transmission,
- type « software event » pour une transmission relative à une opération logicielle, type « internet communication » pour une transmission via le réseau Internet, ou
- type « radio communication » pour une transmission via des ondes radio.

**8.** Passerelle selon l'une des revendications précédentes **caractérisée en ce qu'**elle comprend des moyens pour, préalablement à la réalisation d'un cycle de programmation pour des transmissions requises, vérifier la condition suivante pour un ensemble d'opérations:

$$\sum C_i \leq t2 - t1$$

Où, pour chaque transmission i,

- Ci est une durée,
- Ri l'instant de transmission,
- Di le dernier délai possible de transmission,

et t1 = min (Ri) et t2 = max (Di)

**9.** Passerelle selon l'une des revendications 6 à 8 **caractérisée en ce qu'**elle comprend un programmateur central (502) relié à des applications logicielles (500), chaque application logicielle (500) étant dédiée à un capteur pour établir avec le programmateur central (502) la programmation des opérations requises pour obtenir les transmissions sélectionnées.

**10.** Procédé de gestion d'une passerelle (100) destinée à recevoir des données transmises par des capteurs et à retransmettre ultérieurement ces données vers un serveur distant, une durée et un mode de communication étant associés à chaque transmission de données de l'un des capteurs vers la passerelle, dans lequel on utilise des moyens (102, 104, 108) pour mettre en oeuvre des cycles de programmation allouant des dates (110ᵢ) de réalisation aux transmissions de données des capteurs à l'aide d'une passerelle, conforme à l'une des revendications précédentes, selon leurs modes de communication et leurs durées, chaque cycle de programmation comprenant :

- Une première étape d'application de règles de sélection (102) générant, à partir d'un groupe de transmissions (106i) requises, au moins une séquence (108) de dates (110ᵢ) de réalisation allouées à des transmissions sélectionnées parmi les transmissions requises de telle sorte que ces transmissions sélectionnées puissent être effectuées selon leur mode de communication, sur leurs durées, sans interférer entre elles, et
- Une seconde étape d'application de règles d'itération (104) permettant à la passerelle de modifier ses règles de sélection à appliquer lors d'un cycle ultérieur de programmation et d'inclure une transmission précédemment requise (106'ᵢ) et non sélectionnée dans le groupe des transmissions requises (106i) du cycle ultérieur de programmation.

**Patentansprüche**

**1.** Schnittstelle (100), die zum Empfang von von Sensoren übertragenen Daten und zur späteren Weiterleitung dieser Daten auf einen entfernten Server bestimmt ist, wobei eine Dauer und eine Kommunikationsanordnung jeder Datenübertragung von einem der Sensoren auf die Schnittstelle zugeordnet ist, wobei die Schnittstelle mit Mitteln (102, 104, 108) versehen ist, um Programmierzyklen umzusetzen, die den Datenübertragungen der Sensoren Realisierungsdaten (100i) gemäß ihren Kommunikationsmodi und ihrer Dauer zuordnen, wobei jeder Programmierzyklus umfasst:

- einen ersten Anwendungsschritt von Auswahlregeln (102), die ausgehend von einer Gruppe von von den Sensoren angeforderten Übertragungen (106i) wenigstens eine Sequenz (108) von Realisierungsdaten (110i) generiert, die den ausgewählten Übertragungen aus den angeforderten Übertragungen derart zugeordnet sind, dass diese ausgewählten Übertragungen gemäß ihrem Kommunikationsmodus über ihre Dauer ausgeführt werden können, ohne miteinander zu interferieren, und
- einen zweiten Anwendungsschritt von Iterationsregeln (104), der der Schnittstelle die Abänderung ihrer anzuwendenden Auswahlregeln bei einem späteren Programmierzyklus ermöglicht, und einen Einschlussschritt einer zuvor angeforderten und nicht in der Gruppe der angeforderten Übertragungen (106i) des späteren Programmierzyklus ausgewählten Übertragung (106i).

**2.** Schnittstelle (100) gemäß Anspruch 1, **dadurch gekennzeichnet, dass** sie Mittel umfasst, um Auswahlregeln (102) anzuwenden, die wenigstens eines der folgenden Elemente umfassen: eine Beschränkung, die eine einzige Übertragung zu einem bestimmten Zeitpunkt auf einen und denselben Kommunikationsmodus auferlegt, eine Beschränkung, die eine einzige Übertragung zu einem bestimmten Zeitpunkt auf zwei unterschiedliche Kommunikationsmodi auferlegt, die zum Interagieren geeignet sind, eine Beschränkung, die eine periodische Übertragung auf konstante Weise in Programmierzyklen auferlegt, eine Beschränkung, die eine Chronologie zwischen unterschiedlichen Übertragungen auferlegt.

**3.** Schnittstelle gemäß Anspruch 1 oder 2, **dadurch gekennzeichnet, dass** sie Mittel zum Generieren einer Vielzahl von Sequenzern im ersten Schritt gemäß einem Verzweigungsverfahren umfasst, wobei die Sequenz Übertragungen ein Maximum von Realisierungsdaten zuordnet und verwendet wird, um aus den erforderlichen Übertragungen Übertragungen auszuwählen.

**4.** Schnittstelle gemäß einem der voranstehenden Ansprüche, **dadurch gekennzeichnet, dass** er Mittel umfasst, um iterative Regeln anzuwenden, die wenigstens eine der folgenden Elemente umfassen: eine Beschränkung im Verhältnis zum einer Übertragung zugeordneten Prioritätsniveau, eine Flexibilität im Verhältnis zu einer Versetzungskapazität einer Übertragung, eine Berücksichtigung von spezifischen Regeln in einem Kommunikationsmodus, eine maximale Iterationsanzahl.

**5.** Schnittstelle gemäß Anspruch 4, **dadurch gekennzeichnet, dass** sie Mittel zur Berücksichtigung der spezifischen Iterationsregeln für einen Funkkommunikations- (200), Zellkommunikations- (202) und / oder Softwarekommunikationsmodus (204) umfasst.

**6.** Schnittstelle gemäß einem der voranstehenden Ansprüche, **dadurch gekennzeichnet, dass** sie Mittel umfasst, um die Auswahl- und / oder Iterationsregeln in einer Programmierung umzusetzen, die Gegenstand des Typs UML ist, wobei jede Operation der Schnittstelle als ein Objekt berücksichtigt wird, das durch wenigstens einen der folgenden Parameter definiert ist: eine Ausführungsdauer, eine Übertragungspriorität, ein mögliches Übertragungsdatum, ein effektives Übertragungsdatum, ein auferlegtes Übertragungsenddatum, ein Übertragungsenddatum, einen Übertragungstyp.

**7.** Schnittstelle gemäß Anspruch 6, **dadurch gekennzeichnet, dass** sie Mittel zur Definition jeder Operation durch wenigstens einen der folgenden Übertragungstypen umfasst:

> - Typ "Stub Event" für eine fiktive Übertragung, die die Reservierung eines Übertragungsbereichs zulässt,
> - Typ "Software Event" für eine Übertragung relativ zu einer Software-Operation, Typ "Internet Communication" für eine Übertragung über das Internet-Netz oder
> - Typ "Funkkommunikation" für eine Übertragung über Funkwellen.

**8.** Schnittstelle gemäß einem der voranstehenden Ansprüche, **dadurch gekennzeichnet, dass** sie Mittel umfasst, um vor der Realisierung eines Programmierzyklus für angeforderte Übertragungen die folgende Bedingung für eine Gruppe von Operationen zu überprüfen:

$$\sum Ci \le t2 - t1$$

in der für jede Übertragung i

> - Ci eine Dauer ist,
> - Ri der Übertragungszeitpunkt ist,
> - Di die letzte mögliche Übertragungsfrist ist,

und t1 = min (Ri) und t2 = max (Di) ist.

**9.** Schnittstelle gemäß einem der Ansprüche 6 bis 8, **dadurch gekennzeichnet, dass** sie einen zentralen Programmierer (502) umfasst, der mit Software-Anwendungen (500) verbunden ist, wobei jede Software-Anwendung (500) einem Sender dediziert ist, um mit dem zentralen Programmierer (502) die Programmierung der angeforderten Operationen vorzunehmen, um die ausgewählten Übertragungen zu erhalten.

**10.** Verwaltungsverfahren einer Schnittstelle (100), die zum Empfang von von Sensoren übertragenen Daten und zur späteren Weiterleitung dieser Daten auf einen entfernten Server bestimmt ist, wobei jeder Datenübertragung auf einen der Sensoren zur Schnittstelle eine Dauer und ein Kommunikationsmodus zugeordnet sind, bei dem Mittel (102, 104, 108) zur Umsetzung der Programmierzyklen verwendet werden, die den Datenübertragungen der Sensoren mithilfe einer Schnittstelle gemäß einem der voranstehenden Ansprüche gemäß ihrer Kommunikationsmodi und ihren Dauern Realisierungsdaten (110i) zuordnen, wobei jeder Programmierzyklus umfasst:

> - einen ersten Anwendungsschritt von Auswahlregeln (102), die ausgehend von einer Gruppe von angeforderten Übertragungen (106i) wenigstens eine Sequenz (108) von Realisierungsdaten (100i) generieren, die Übertragungen zugeordnet sind, welche aus den angeforderten Übertragungen derart ausgewählt sind, dass diese ausgewählten Übertragungen gemäß ihrem Kommunikationsmodus über ihre Dauern ausgeführt werden können, ohne miteinander zu interferieren, und

- einen zweiten Anwendungsschritt von Iterationsregeln (104), der der Schnittstelle die Abänderung ihrer Auswahlregeln ermöglicht, die bei einem späteren Programmierzyklus anzuwenden und in eine zuvor angeforderte Übertragung (106'i) einzuschließen und nicht aus der Gruppe der angeforderten Übertragungen (106i) des späteren Programmierzyklus ausgewählt sind.

## Claims

1. A gateway (100) intended to receive data transmitted by sensors and to subsequently retransmitted these data to a remote server, a duration and a communication mode being associated with each data transmission from one of the sensors to the gateway, the gateway being fitted with means (102, 104, 108) for implementing programming cycles allocating completion dates ($110_i$) to the data transmissions of the sensors; according to their communication modes and their durations, each programming cycle comprising:

   - a first step of applying selection rules (102) generating, from a group of transmissions (106i) required by the sensors, at least one sequence (108) of completion dates ($110_j$) allocated to selected transmissions among the required transmissions so that these selected transmissions can be performed according to their communication mode, over their durations, without interfering with each other, and
   - a second step of applying iteration rules (104) enabling the gateway to change its selection rules to be applied during a subsequent programming cycle and to include a previously required transmission ($106'_i$) not selected from the group of the required transmissions (106i) of the subsequent programming cycle.

2. The gateway (100) according to claim 1, **characterised in that** it comprises means for applying selection rules (102) comprising at least one of the following elements: a constraint imposing a single transmission at a given time over a same communication mode, a constraint imposing a single transmission at a given time over two distinct communication modes likely to interact, a constraint imposing a constantly periodic transmission in programming cycles, a constraint imposing a chronology between different transmissions.

3. The gateway according to claim 1 or 2, **characterised in that** it comprises means for generating, in the first step, a plurality of sequences according to a branching method, the sequence allocating a maximum of completion dates to transmissions being used for selecting transmissions among the required transmissions.

4. The gateway according to one of the preceding claims, **characterised in that** it comprises means for applying iterative rules comprising at least one of the following elements: a constraint relative to the priority level associated with a transmission, a flexibility relative to a capacity of shifting a transmission, a consideration of specific rules for a communication mode, a maximum number of iterations.

5. The gateway according to claim 4, **characterised in that** it comprises means for considering specific iteration rules for a radio (200), cellular (202) and/or software (204) communication mode.

6. The gateway according to one of the preceding claims, **characterised in that** it comprises means for implementing the selection and/or iteration rules in a UML type object programming considering each operation of the gateway as an object defined by at least one of the following parameters: a run duration, a transmission priority, a possible transmission date, an effective transmission date, an imposed transmission end date, a transmission end date, a transmission type.

7. The gateway according to claim 6, **characterised in that** it comprises means for defining each operation by at least one of the following transmission types:

   - a "stub event" type for a stub transmission enabling a transmission range to be reserved,
   - a "software event" type for a transmission related to a software operation,
   - an "Internet communication" type for a transmission through the Internet network, or
   - a "radio communication" type for a transmission through radio waves.

8. The gateway according to one of the preceding claims, **characterised in that** it comprises means for, prior to completing a programming cycle for required transmissions, checking the following condition for a set of operations:

$$\sum Ci \leq t2 - t1$$

where, for each transmission i,

- Ci is a duration,
- Ri the transmission time,
- Di the latest possible transmission time limit,

and t1 = min (Ri) and t2 = max (Di).

9. The gateway according to one of claims 6 to 8, **characterised in that** it comprises a core programmer (502) connected to software applications (500), each software application (500) being dedicated to a sensor to establish with the core programmer (502) programming of the required operations in order to obtain the selected transmissions.

10. A method for managing a gateway (100) intended to receive data transmitted by sensors and for subsequently retransmit these data to a remote server, a duration and a communication mode being associated with each data transmission from one of the sensors to the gateway, wherein means (102, 104, 108) are used for implementing programming cycles allocating completion dates ($110_i$) to data transmissions of the sensors using a gateway, according to one of the preceding claims, in accordance with their communication modes and their durations, each programming cycle comprising:

   - a first step of applying selection rules (102) generating, from a group of required transmissions (106i), at least one sequence (108) of completion dates ($110_i$) allocated to selected transmissions among the required transmissions so that these selected transmissions can be performed according to their communication mode, over their durations, without interfering with each other, and
   - a second step of applying iteration rules (104) enabling the gateway to change its selection rules to be applied during a subsequent programming cycle and to include a previously required transmission ($106'_i$) not selected from the group of the required transmissions (106i) of the subsequent programming cycle.

**Fig. 1**

Fig. 2a

Fig. 2b

Fig. 2c

Fig. 2d

Fig. 2e

Fig. 2f

**Fig. 3**

**Fig. 4**

500 — ;Bundle 1    ;Scheduler — 502

addTask(RecurrencyType SINGLE)

taskID

plan

**Fig. 5a**

onEvent(taskID. ONTIME)

delete task

500 — ;Bundle 1    ;Scheduler — 502

addTask(RecurrencyType SINGLE)

taskID

plan

onEvent(taskID. ONTIME)

**Fig. 5b**

onEvent(taskID. ONTIME)

notifyJobFinished(taskID)

plan

onEvent(taskID. ONTIME)

delete task

500 — ;Bundle 1    ;Scheduler — 502

addTask(RECURRENT. NUMBER_JOBS 3)

taskID

plan

onEvent(taskID. ONTIME)    plan

**Fig. 5c**

onEvent(taskID. ONTIME)

notifyJobFinished(taskID)

plan

onEvent(taskID. ONTIME)

delete task

**Fig. 5d**

**Fig. 5e**

**Fig. 5f**

500

;Bundle 1

;Scheduler — 502

addTask(RecurrencyType RDV)

taskID

plan

onRdvPlanned(taskID. timeRDV)

unvalidate rendezvous, another time suggested
cancelTask()

delete task

addTask(RV. new time)

taskID2

onRdvPlanned(taskID2. timeRDV2)

plan

update Task(RDV_PLANNED_PRIORITY)

fix task

**Fig. 5g**

**Fig. 6a**

| J0 | | J1 | | | J2 | |
| r0 | d0 | r1=r0+T | r1+I | r2=r1+T | | r2+I |

I = T

**Fig. 6b**

| J0 | | J1 | | J2 | |
| r0 | | r1=r0+T | | r2=r1+T | |

**Fig. 6c**

| J0 | | J1 | | J2 | |
| r0 | d0 | r1=r0+T | r1+c | r2=r1+T | r2+c |

**Fig. 6d**

| J0 | | | J1 | | | J2 | |
| r0 | f0 | d0 | r1=f0+T | f1 | r1+I | r2=f1+T | r2+I |

I = c

| J0 | | J1 | | J2 | |
| r0 | f0=d0 | r1=f0+T | r1+c | r2=f1+T | r2+c |

**RÉFÉRENCES CITÉES DANS LA DESCRIPTION**

**Documents brevets cités dans la description**

- EP 1699174 A